# EUROPEAN PATENT SPECIFICATION

(11) **EP 3 515 186 B1**
(45) Date of publication and mention of the grant of the patent: **26.11.2025**
(21) Application number: 17767857.0
(22) Date of filing: 20.09.2017
(51) Int. Cl.: A01M 1/14, A01M 1/10, A01M 1/02

(54) **ECDYSOZOANS TRAP**
ECDYSOZOENFALLE
PIÈGE À ECDYSOZOAIRES

(30) Priority: 20.09.2016 EP 16189631; 20.09.2016 US 201615270472
(43) Date of publication of application: 31.07.2019
(73) Proprietor: InnoC srl, 1332 Genval (BE)
(72) Inventor: MAILLEUX, Anne-Catherine, 1332 Genval (BE); SOLHEID, Manhattan, 4950 Ovifat/Waimes (BE)
(74) Representative: Calysta NV
(86) International application number: PCT/EP2017/073774
(87) International publication number: WO 2018/054974

(56) References cited:
- FR-A1- 2 859 598
- US-A- 4 031 654
- US-A- 4 217 722
- US-A- 4 709 504
- US-B1- 6 442 889

## Description

### FIELD OF INVENTION

The present invention relates to the field of pest infestations, in particular by ecdysozoans. More particularly, the present invention relates to a trap for catching ecdysozoans.

### BACKGROUND OF INVENTION

Ecdysozoans are animals that grow through successive molts of the exoskeleton and that share characteristics of a multi-layered cuticle composed of organic material and appendages for locomotion. Ecdysozoans are the source of various pest infestations.

Pest eradication is time-consuming, expensive, and hard work with existing technologies. In particular, ecdysozoans may hide in inaccessible places. Moreover, they are resistant to most pesticides and insecticides. After identification of the pest, two options are currently available: mechanical or physical control, and chemical control.

Mechanical or physical control does not use pesticide or insecticide and is recommended to decrease and remove a maximum the parasitic load. Its principal advantage is to not introduce any resistance. However, mechanical control is time-consuming and requests many repetitions, most of the time without totally overcoming the infestation.

Chemical control uses pesticides or insecticides which provide various disadvantages: they may be toxic for humans, some are highly persistent and cause development of resistance to pesticides and/or insecticides. Therefore, chemical methods are to be avoided if possible.

Many traps for insects, in particular crawling insects, are commercially available. Some of them are based on the use of natural or synthetic insecticides and thus present a risk to the health of the user.

Many traps comprise a sticky film to trap individuals. The US patent US 4,709,504 discloses a portable disposable insect trap in which the upper surface of the floor is coated with tacky glue. Similarly, the US patent No. 8,371,064 discloses an insect trap wherein a sticky substance is applied on the top surface of a substrate. However, insects are repelled by the contact between their legs, or their ventral side, and the sticky film applied on the floor. Therefore, insects escape from the trap upon first contact and are not trapped. The US patent No. 4,217,722 discloses an insect trap in which the inner face of the upper sheet has an adhesive material affixed thereto.

US patent No. 4,031,654 describes a further trap of this kind.

According to current control methods, there exists a need to provide devices and methods which are non-toxic for humans and for environment, and which are enable to efficiently eliminate ecdysozoans infestations.

The Applicant shows that coating the interior surface of a roof or a wall of a trap with a sticky substance allows legs or ventral side of ecdysozoans such as insects or arachnids not to be directly in contact with the sticky substance. Therefore, the sticky substance is not detected by ecdysozoans which move then into the trap.

The present invention thus relates to a device for trapping ecdysozoans comprising a sticky substance applied on a surface that is not the upper surface of the floor.

### SUMMARY

The present invention relates to an ecdysozoans trap as set forth in claim 1.

According to one embodiment, the sticky substance (7) is tacky glue or double-sided adhesive tape.

In one embodiment, the sticky substance (7) further comprises at least one attractive agent. In one embodiment, the at least one attractive agent is a sexual attractant or a pheromone.

According to one embodiment, the trap (1) is made of a rigid material. In one embodiment, the rigid material is selected from the group comprising of plastic, wood, high density cardboard, metal, glass, polystyrene, plaster, and combinations thereof.

According to one embodiment, the trap (1) has a rough inner surface. In one embodiment, the rough inner surface is a rough inner floor.

In one embodiment, the trap (1) is an elongated strip ranging from about 2 cm to about 500 cm length. In one embodiment, the trap (1) comprises two opening (6) sides on each side of a longitudinal axis (4).

In another embodiment, the trap (1) is a circular trap ranging from about 2 cm to about 15 cm in diameter.

According to one embodiment, the trap (1) comprises openings (6) sufficiently large for ecdysozoans to enter said trap. In one embodiment, the openings (6) range from about 0.1 mm to about 20 mm high.

Another aspect of the present invention is a method for trapping ecdysozoans comprising the step of providing a trap (1) as described hereinabove.

### DEFINITIONS

In the present invention, the following terms have the following meanings:
- The term "about" is used herein to mean approximately, roughly, around, or in the region of. When the term "about" is used in conjunction with a numerical range, it modifies that range by extending the boundaries above and below the numerical values set forth. In general, the term "about" is used herein to modify a numerical value above and below the stated value by a variance of 20 percent, preferably of 10 percent, more preferably of 5 percent.
- **"Longitudinally"** means extending in the direction of the length of a material.

### BRIEF DESCRIPTION OF THE DRAWINGS

**Figures 1A** and **1B** are overall perspective views of a trap 1 which is not part of the claimed invention.
**Figures** 2A and 2B are perspective views of the trap of Figures 1A and 1B reversed so that the floor 2 is represented at the top of the view and the roof 3 is represented at the bottom of the view.
**Figure 3** is a front view of the trap of Figure 1B.
**Figure 4** is a side view of the trap of Figure 1A.
**Figure 5** is an overall perspective view of a trap **1** according to the present invention.
Figure 6 is a side view of the trap of Figure 5. The angle α represents the angle between the roof 3 and the floor 2 at the bottom of the trap; the angle β represents the angle between the roof 3 and the floor 2 at the opening of the trap.

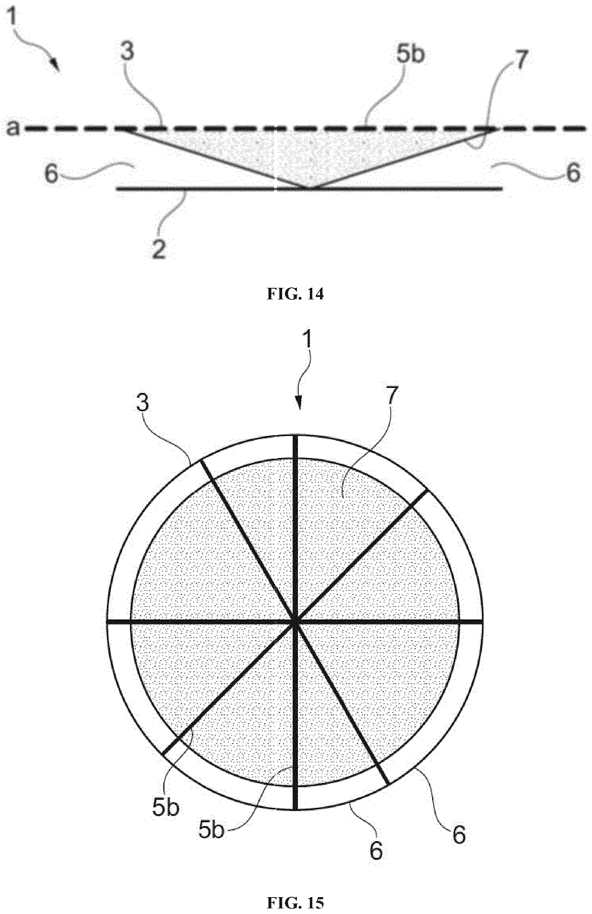

Figure 7 to Figure 22 show exemplary traps of the prior art which are not covered by the claims of the present invention.
**Figure 23** is an overall perspective view of an embodiment of a trap **1** according to the present invention wherein the roof **3** is concave.
**Figure 24** is a side view of the trap of Figure 23.

### DETAILED DESCRIPTION

The following detailed description will be better understood when read in conjunction with the drawings. For the purpose of illustrating, the trap is shown in the preferred embodiments. It should be understood, however that the application is not limited to the precise arrangements, structures, features, embodiments, and aspect shown. The drawings are not drawn to scale and are not intended to limit the scope of the claims to the embodiments depicted. Accordingly, it should be understood that where features mentioned in the appended claims are followed by reference signs, such signs are included solely for the purpose of enhancing the intelligibility of the claims and are in no way limiting on the scope of the claims.

The present invention relates to a device for trapping ecdysozoans comprising a sticky substance. Accordingly, the invention relates to an ecdysozoans trap 1 comprising a sticky substance, preferably an ecdysozoans catching trap.

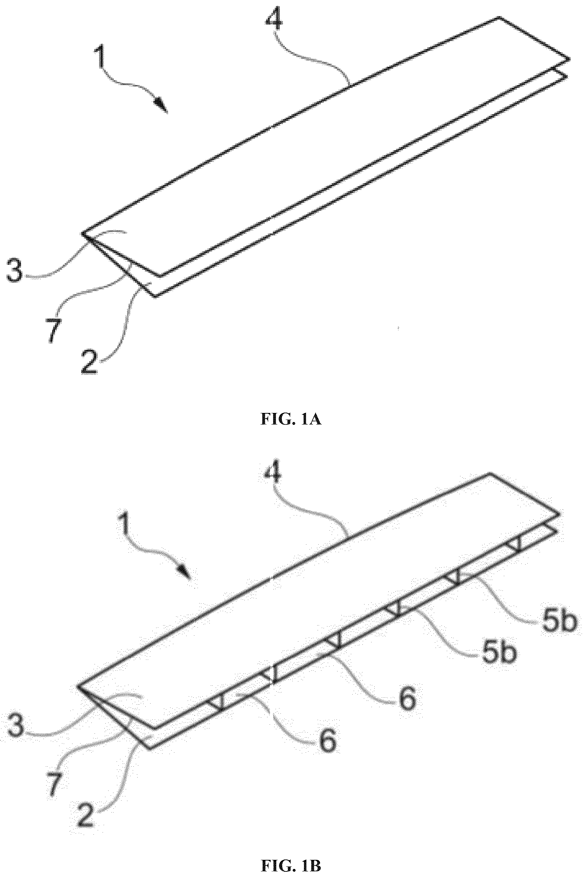

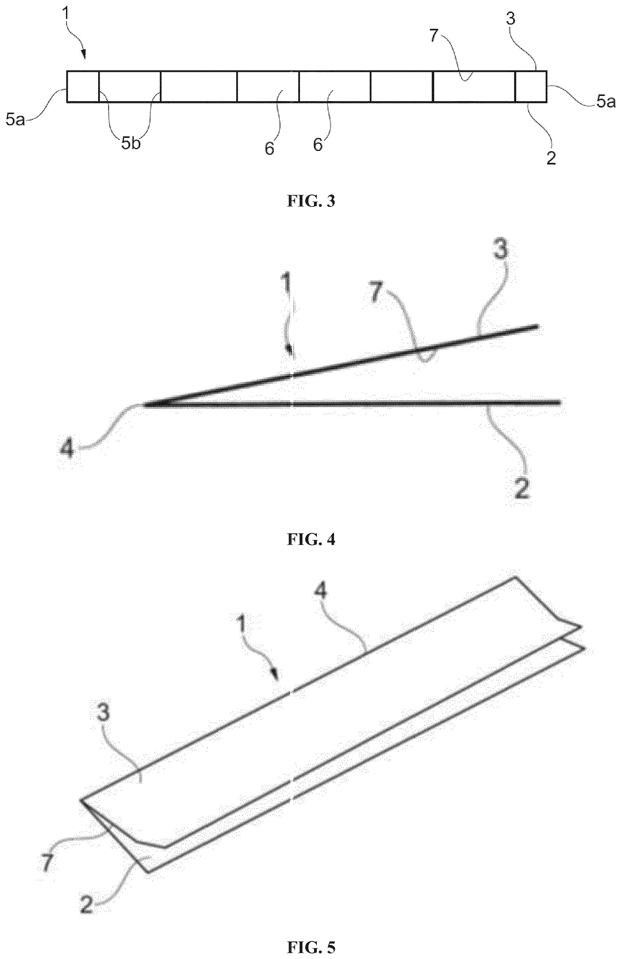

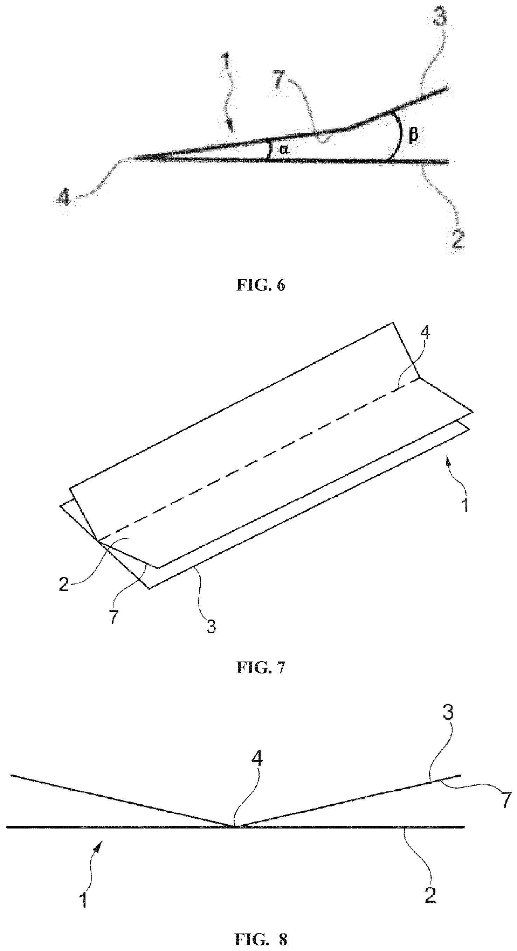

Figs. 5 and 6 show a trap according to the invention. As depicted in Fig. 1, the trap **1** has a floor **2** and a roof **3,** separated for most of the transverse width of the trap by a small distance, to provide a narrow slit-like opening into which ecdysozoans may crawl.

In most actual traps, the interior upper surface of the floor has a coat of tacky glue to capture ecdysozoans. However, the contact between ecdysozoans and glue, when they crawl or put their legs on glue, is repellent. Therefore, ecdysozoans escape from the trap upon first contact.

The Applicant shows that glue coated on the interior surface of the roof or the walls of a trap allows legs or the ventral side of ecdysozoans not to be in contact with glue. Therefore, the sticky substance is not detected by ecdysozoans when they enter the trap. Moreover, the Applicant shows that ecdysozoans glued on their dorsal side do not secrete pheromone that alert other individuals.

Therefore, by applying a sticky substance on an interior surface of the trap which is not the floor, ecdysozoans would enter the trap without detecting the sticky substance, thus would further move inward where they would be glued by the sticky substance, all without secreting alarm pheromones. Contrary to a trap having a sticky substance on the floor, Applicant demonstrates the trap efficiency gradually increases as ecdysozoans are captured (see Example 4). Therefore, ecdysozoans captured by a trap of the invention continue to produce signals that attract other individuals.

Accordingly, at least one interior surface of the trap **1** has a coat of sticky substance **7,** provided that the interior upper surface of the floor **2** of the trap **1** is not coated with said sticky substance **7.** In one embodiment, the at least one interior surface coated with a sticky substance **7** is the interior surface of the roof **3** and/or the surface of internal walls **5.** In one embodiment, the floor **2** is not coated with a sticky substance **7.**

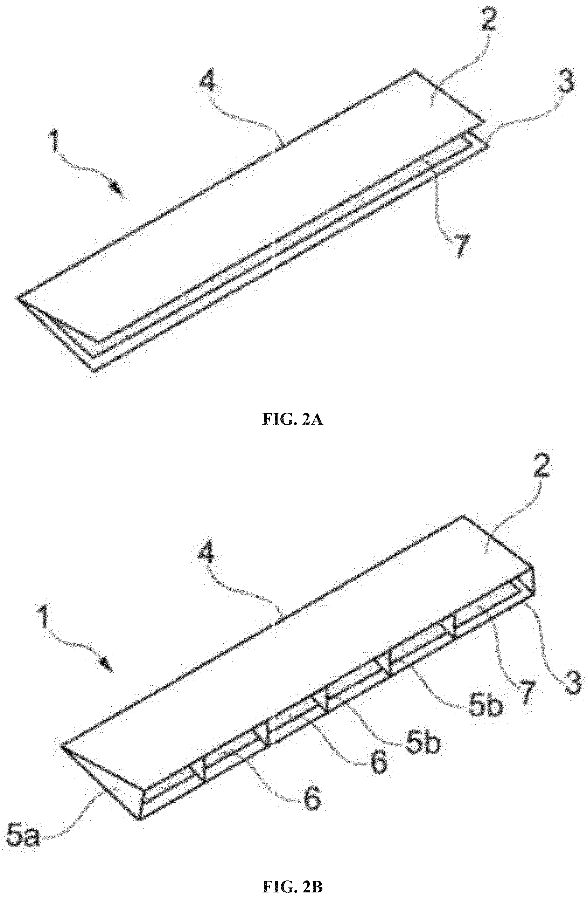

As depicted in Fig. 2, the at least one interior surface coated with a sticky substance **7** may be the interior surface of the roof **3.** In other words, in one embodiment, the interior surface of the roof **3** of the trap **1** is coated with a sticky substance **7.**

In one embodiment, the trap **1** is an elongated strip, which is sized to the ecdysozoans, preferably insects and/or arachnids, it is designed to attract.

In one embodiment, the trap **1** is from about 2 cm to about 100 cm length, preferably from about 5 cm to about 90 cm, more preferably from about 10 cm to about 80 cm. In a preferred embodiment, the trap 1 is about 15, 20, 25, 30, 35, 40, 45 or 50 cm length. In particular embodiments, the trap 1 is about 63, 73, 83 or 93 cm length to fit common widest size door passage.

In another embodiment, the trap **1** has a length of more than 100 cm to fit longer places where the trap may be placed, such as for example along mattresses, along couches or along the whole length of a wall. In one embodiment, the trap **1** is from about 100 cm to about 500 cm length. In particular embodiments, the trap **1** is about 120 cm, 140 cm, 160 cm, 180 cm, 190 cm, or 200 cm. In particular embodiments, the length of the trap is adapted to fit common length and width of mattresses.

In another embodiment, the trap **1** has a length of more than 500 cm. According to this embodiment, the trap **1** may be packaged in roll form or other forms to take up minimum place.

In one embodiment, the trap **1** is from about 0.5 cm to about 10 cm width, preferably from about 1 cm to about 8 cm, more preferably from about 1.5 cm to about 6 cm, even more preferably from about 2 cm to about 4 cm. In a particular embodiment, the trap **1** is about 0.5, 1, 1.5, 2, 2.5, 3, 3.5, 4, 4.5, or 5 cm width. In another particular embodiment, the trap **1** is about 6, 6.5, 7, 7.5, 8, 8.5, 9, 9.5 or 10 cm width.

In another embodiment, the trap **1** is an elongated strip having a longitudinal axis **4,** and wherein the sloping roof runs to each side of the longitudinal axis **4,** as depicted in Figs. 7 and 8. According to this embodiment, the trap **1** comprises two opening sides, one on each side of the longitudinal axis **4.**

In another embodiment, the trap **1** is a circular trap, which is sized to the ecdysozoans, preferably insects and/or arachnids, it is designed to attract.

In one embodiment, the trap **1** is from about 2 cm to about 15 cm in diameter, preferably from about 4 cm to about 12 cm, more preferably from about 5 cm to about 10 cm. In a preferred embodiment, the trap **1** is about 4, 5, 6, 7, 8, 9, or 10 cm in diameter. In a particular embodiment, the diameter of the trap **1** is sized to fit common widest diameter of bed legs.

In another embodiment, the trap **1** has a square shape.

In one embodiment, the trap **1** is from about 2 cm to about 15 cm square, preferably from about 4 cm to about 12 cm square, more preferably from about 5 cm to about 10 cm square. In a preferred embodiment, the trap **1** is about 4, 5, 6, 7, 8, 9, or 10 cm square. In a particular embodiment, the shape of the trap **1** is sized to fit common widest table legs, wardrobe legs, desktop legs, and the like.

Whatever the shape of the trap **1** (elongated, circular or square), the roof 3 is a sloping roof.

According to the invention, the degree of the slope varies along the roof **3.** According to the invention, the degree of the slope of the roof 3 is greater at the opening of the trap 1 than at the bottom of the trap **1.** According to the invention, the slope of the roof **3** is growing from the bottom of the trap to the opening **6** of the trap.

According to the invention, the roof **3** comprises at least two distinct and successive slopes.

In one embodiment, the slope of the roof **3** describes an angle ranging from about 0.01° to about 0.1° from the floor **2,** preferably from about 0.05° to about 0.8°, more preferably from about 0.1° to about 0.5°, even more preferably from about 0.1° to about 0.3°. In a particular embodiment, the slope of the roof **3** describes an angle of about 0.1° from the floor **2.** In another particular embodiment, the slope of the roof **3** describes an angle of about 0.3° from the floor **2.**

In one embodiment, the slope of the roof **3** at the opening of the trap **1** describes an angle ranging from about 0.1° to about 0.5° from the floor **2,** preferably from about 0.2° to about 0.3°. In one embodiment, the slope of the roof **3** at the bottom of the trap **1** describes an angle ranging from about 0.05° to about 0.2° from the floor **2,** preferably from about 0.1° to about 0.15°. In one embodiment, the slope of the roof **3** at the opening of the trap **1** describes an angle of about 0.25° from the floor **2** and the slope of the roof **3** at the bottom of the trap **1** describes an angle of about 0.1° from the floor **2.** In one embodiment, the roof **3** has a first slope and a second slope, wherein the first slope starts at the bottom of the trap **1** and the second slope ends at the opening of the trap **1.** In one embodiment, the first slope of the roof **3** describes an angle ranging from about 0.05° to about 0.2° from the floor **2,** preferably from about 0.1° to about 0.15°. In one embodiment, the second slope of the roof **3** describes an angle ranging from about 0.1° to about 0.5° from the floor **2,** preferably from about 0.2° to about 0.3°. In one embodiment, the first slope of the roof **3** describes an angle of about 0.1° from the floor **2** and the second slope of the roof **3** describes an angle of about 0.25° from the floor **2.**

In reference with the Fig. 6, the angle α ranges from about 0.05° to about 0.2° from the floor **2,** preferably from about 0.1° to about 0.15°. Still in reference with the Fig. 6, in one embodiment, the angle β ranges from about 0.1° to about 0.5°, preferably from about 0.2° to about 0.3° from the floor **2.**

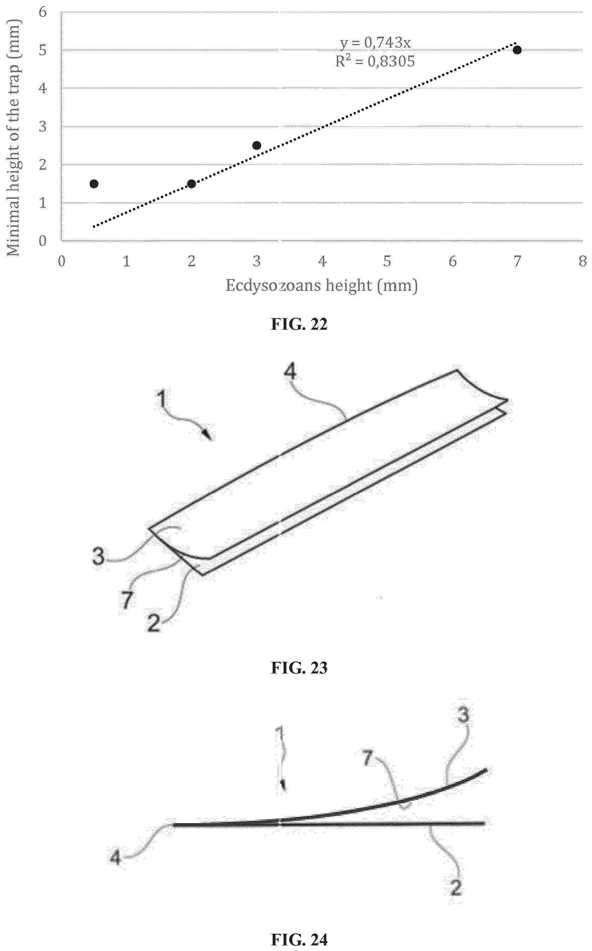

In another embodiment, the roof **3** may be arched upward from a longitudinal line **4.** According to this embodiment, the roof **3** may be arched upward from a longitudinal line to parallel the floor **2** at the opening **6.** In a particular embodiment, the roof **3** is concave, as illustrated in Fig. 23 and 24.

In another embodiment, the floor **2** is a slopping floor while the roof **3** is straight horizontal.

According to the invention, the degree of the slope varies along the floor **2.** According to the invention, the degree of the slope of the floor **2** is greater at the opening of the trap **1** than at the bottom of the trap **1.** According to the invenion, the slope of the floor **2** is growing from the bottom of the trap to the opening **6** of the trap.

According to the invention, the floor **2** comprises at least two distinct and successive slopes.

In one embodiment, the slope of the floor **2** describes an angle ranging from about 0.01° to about 0.1° from the roof **3,** preferably from about 0.05° to about 0.8°, more preferably from about 0.1° to about 0.5°, even more preferably from about 0.1° to about 0.3°. In a particular embodiment, the slope of the floor **2** describes an angle of about 0.1° from the roof **3.** In another particular embodiment, the slope of the floor **2** describes an angle of about 0.3° from the roof **3.**

In one embodiment, the slope of the floor **2** at the opening of the trap **1** describes an angle ranging from about 0.1° to about 0.5° from the roof **3,** preferably from about 0.2° to about 0.3°. In one embodiment, the slope of the floor **2** at the bottom of the trap **1** describes an angle ranging from about 0.05° to about 0.2° from the roof **3,** preferably from about 0.1° to about 0.15°. In one embodiment, the slope of the floor **2** at the opening of the trap **1** describes an angle of about 0.25° from the roof **3** and the slope of the floor **2** at the bottom of the trap **1** describes an angle of about 0.1° from the roof **3.** In one embodiment, the floor **2** has a first slope and a second slope, wherein the first slope starts at the bottom of the trap **1** and the second slope ends at the opening of the trap **1.** In one embodiment, the first slope of the floor **2** describes an angle ranging from about 0.05° to about 0.2° from the roof **3,** preferably from about 0.1° to about 0.15°. In one embodiment, the second slope of the floor **2** describes an angle ranging from about 0.1° to about 0.5° from the roof **3,** preferably from about 0.2° to about 0.3°. In one embodiment, the first slope of the floor **2** describes an angle of about 0.1° from the roof **3** and the second slope of the floor **2** describes an angle of about 0.25° from the roof **3.**

In one embodiment, the floor **2** may be arched. In one embodiment, the floor **2** is concave.

The skilled person will understand that, according to the type of ecdysozoans to be trapped, the angle(s) described by the roof **3** or the floor **2** may be varied accordingly, as sizes of ecdysozoans may vary depending on the species.

In one embodiment, the opening **6** is sufficiently high for ecdysozoans to enter the trap. In a preferred embodiment, the opening **6** is from about 0.1 mm to about 20 mm high, preferably from about 0.5 mm to about 15 mm high, more preferably from about 1 mm to about 10 mm high. In particular embodiments, the opening **6** is about 1, 1.5, 2, 2.5, 3, 3.5, 4, 4.5, or 5 mm high. In other particular embodiments, the opening **6** is about 6, 6.5, 7, 7.5, 8, 8.5, 9, 9.5, or 10 mm high. In a preferred embodiment, the opening **6** is about 1.5 mm high. In another preferred embodiment, the opening **6** is about 1.7 mm high.

As an illustration, the height of openings **6** may be from 0.5 mm to 5 mm for adult bedbugs, preferably from 0.8 mm to 4 mm, more preferably from 1 mm to 2 mm. In a preferred embodiment, the height of openings **6** is about 1.5 or 1.7 mm for adult bedbugs.

The skilled person will understand that, according to the type of ecdysozoans to be trapped, the height of openings **6** may be varied accordingly, as sizes of ecdysozoans may vary depending on the species.

In one embodiment, interstices of the trap of the invention are sufficiently large for ecdysozoans to pass between the walls **5** and sufficiently narrow for ecdysozoans, which are mostly thigmotactic, to be tight against the walls **5.**

The skilled person will understand that, according to the type of ecdysozoans to be trapped, the width of interstices may be varied accordingly, as sizes of ecdysozoans may vary depending on the species. In a particular embodiment, by "having interstices sufficiently large for ecdysozoans to pass between the walls", it is meant that the interstices width may be less than 1 cm up to several cm, such as 1 cm, 2 cm, 3 cm, 4 cm, 5 cm or more. In one embodiment, the interstices width may be from about 1 mm to about 15 cm. In particular embodiments, the interstices may be about 1, 2, 3, 4, 5, 6, 7, 8 or 9 mm width. In other particular embodiments, the interstices may be about 1.5, 2.5, 3.5, 4.5 or 5.5 cm width.

As an illustration, the width of interstices may be from 0.1 cm to 5 cm for adult bedbugs, preferably from 0.5 cm to 4 cm, more preferably from 1 cm to 2 cm. In a preferred embodiment, the width of interstices is about 2 cm for adult bedbugs.

In one embodiment, interstices may all have the same size, i.e. the same width. In another embodiment, interstices may have various widths.

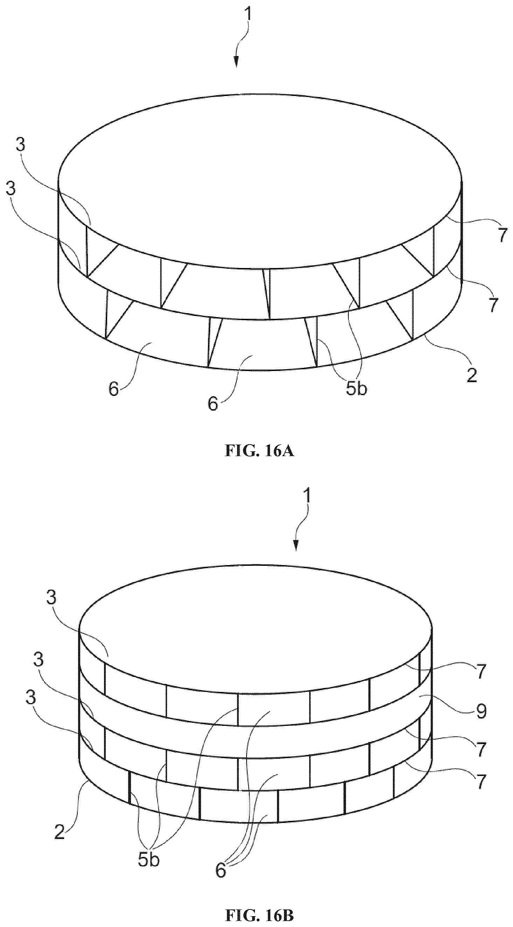

As depicted in Fig. 16A, the trap **1** may comprise several stages. In one embodiment, each stage comprises a roof **3** coated with a sticky substance **7.** In one embodiment, the sicky substance **7** is coated on the inner surface of the roof **3.**

As depicted in Fig. 16B, the trap **1** may further comprise a solid stage formed by smooth material **9,** such as smooth plastic. Ecdysozoans generally prefer to crawl or to walk on a rough material. In particular, ecdysozoans would not crawl or walk on a smooth vertical surface. An advantage of this embodiment is that ecdysozoans would not crawl or climb on the upper part of the trap **1,** and thus have no access to what is over the trap **1,** such as for example a bed when the trap **1** is placed under the leg of a bed.

Whatever the embodiment, the roof **3** may be maintained by means of vertical walls **5.** In one embodiment, the roof **3** is maintained sloped by means of vertical walls **5.** In another embodiment, the roof **3** is maintained horizontal by means of vertical walls **5.**

In one embodiment, the walls **5** are formed by rigid or semi-rigid material. In one embodiment, the material of the walls **5** is plastic, wood, cardboard, pasteboard or paperboard, metal, glass, polystyrene, such as expanded polystyrene, or plaster.

In one embodiment, the trap **1** comprises external **5a** and/or internal walls **5b,** as depicted in Figs. 1B and 2B.

The walls **5** prevent any larger unwanted objects coming into contact with the sticky substance **7,** for example if a person inadvertently stands on the trap. The walls **5** also provide rigidity to the trap **1** for when the trap is being handled, either before or after use.

In one embodiment, the internal walls **5b** delimit several interstices inside the trap **1.** As used herein, the term "interstice" means a longitudinal space delimited by floor-to-ceiling partitions or interior walls. The term "interstice" may be replaced by "corridor", "hall", "cell", and the like.

In one embodiment, the trap **1** does not comprise internal walls **5b** and comprise only one interstice delimited by external walls **5a.**

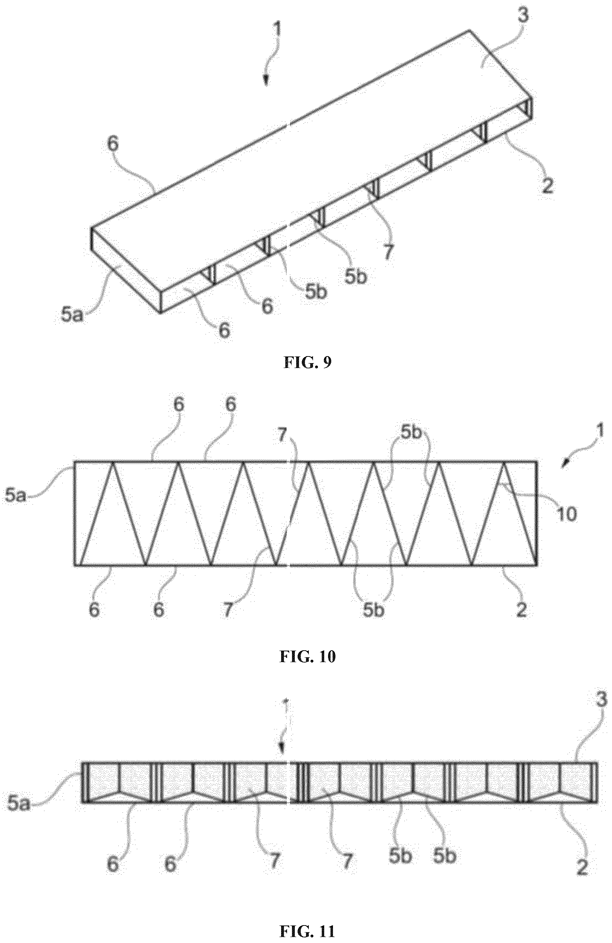

As depicted in Fig. 9, the at least one interior surface coated with a sticky substance **7** may be the interior surface of the walls **5.** In other words, in one embodiment, the interior surface of the walls **5** of the trap **1** is coated with a sticky substance **7.**

In one embodiment, the interior surface of the walls **5** coated with a sticky substance **7** is the interior surface of external walls **5a.** In another embodiment, the surface of the walls 5 coated with a sticky substance **7** is at least one surface of internal walls **5b.** In another embodiment, the interior surface of the walls **5** coated with a sticky substance **7** is the interior surface of external walls **5a** and at least one surface of internal walls **5b.** In a particular embodiment, all interior surfaces of walls **5** of the trap **1** are coated with a sticky substance **7.**

As depicted in Fig. 10, two contiguous walls **5** form a salient angle **10.** In a particular embodiment, two contiguous walls **5** form an angle **10** ranging from about 1° to about 40°, preferably from about 5° to about 35°, more preferably from about 10° to about 30°. In one embodiment, the salient angle **10** formed by two contiguous walls **5** is such that the opening is sufficiently large for ecdysozoans to enter the trap.

In one embodiment, the trap **1** may comprise one opening side. In another embodiment, the trap **1** may comprise two opening sides.

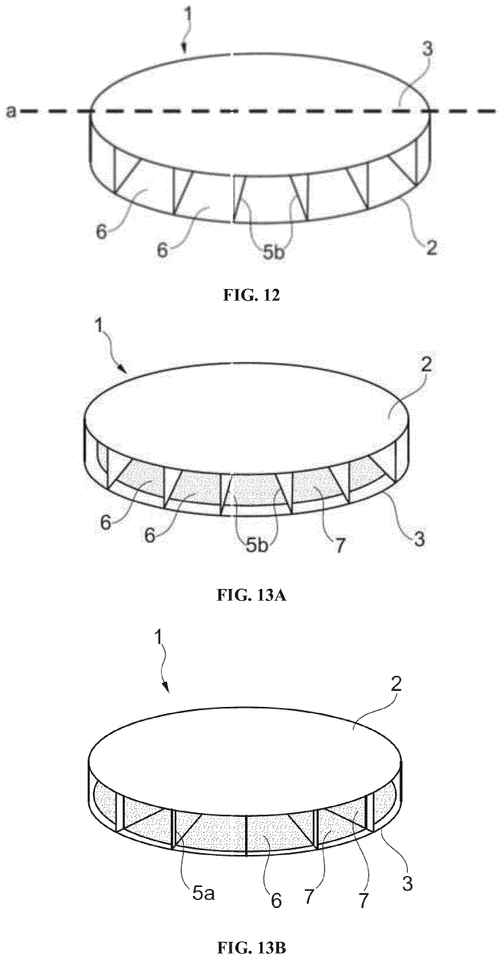

As depicted in Fig. 13B, the interior surface of the roof **3** and the interior surface of at least one wall **5** may be coated with a sticky substance **7.**

Whatever the embodiment, at least a portion of the at least one interior surface of the trap **1** comprises a sticky substance **7.**

Whatever the embodiment, the sticky substance **7** may be applied in a continuous strip down the length of the trap on the at least one interior surface but is confined to an area set back from the lengthwise edge of the roof **3** and also from the end edges of the roof **3.** The outside surfaces of the floor **2,** of the roof **3** and of the walls **5,** their edges, and a marginal set-back area of the interior surface of the roof **3** and/or the walls **5** are free of the sticky substance **7,** making the trap **1** easy and safe to be handled and used.

In another embodiment, the sticky substance **7** may be applied in a continuous strip down the length of the trap **1** on the at least one interior surface up to the edge of the trap **1** without set-back area.

Moreover, the trap of the invention does not require the use of fluid or powder like talcum powder as in the case of pitfall capture. This has the advantage of providing a clean and easy to use trap.

A second advantage of the trap of the invention is that it is designed for a wide variety of ecdysozoans species, preferably insects and/or arachnids, and sizes due to sufficiently large openings **6.**

Another advantage is the sloping roof **3,** or walls **5** forming a salient angle, that allow ecdysozoans of nearly all sizes to be trapped. Ecdysozoans may enter through sufficiently large openings **6** and then go deeper into the trap **1** until they reach the height of the roof **3,** or angle between walls **5,** that corresponds to their size. At this point, they touch the roof **3,** or the walls **5,** coated with the sticky substance **7** and are captured.

Moreover, ecdysozoans are glued inside of the trap **1** and not at the periphery, which ensures they cannot detach when the trap is handled or moved. Furthermore, ecdysozoans glued inside of the trap **1** leave free place for other ecdysozoans to enter the trap **1.**

Furthermore, contrary to other traps, the trap **1** of the invention does not encourage the ecdysozoans to secrete alarm pheromones but instead encourages the ecdysozoans to send positive signals that attract their congeners.

Another advantage of the trap of the invention is its discreet design, adapted to be placed along walls or under bed foot for example. This advantage may be useful under particular conditions such as in hotel rooms.

By "sticky substance" it is meant that the substance is intended to have objects, in this case ecdysozoans, preferably insects and/or arachnids, adhere or stick thereto. The term "sticky" may be replaced by "tacky".

Examples of sticky substances **7** include, but are not limited to, tacky glue and double-sided adhesive tape.

In one embodiment, the sticky substance **7** is a substance that does not dry. In one embodiment, the sticky substance **7** is a substance that remains sticking or adhesive. In one embodiment, the sticky substance **7** is a substance that remains sticking or adhesive a long time. As used herein, the term "a long time" means at least 12 hours, 24 hours, 36 hours, 48 hours or more. In a preferred embodiment, the sticky substance **7** is a substance that remains sticking or adhesive at least 3, 4, 5, 6 or 7 days. In one embodiment, the sticky substance **7** is sufficiently strong to keep ecdysozoans in place.

In one embodiment, the sticky substance **7** comprises a mixture of polybutene oil and polyisobutylene.

In one embodiment, the composition of the sticky substance **7** is 5-15 wt % polyisobutylene and the remainder polybutene oil. In a particular embodiment, the composition of the sticky substance **7** is 90 wt % polybutene oil and 10 wt % polyisobutylene.

The polyisobutylene is added to the polybutene oil in order to improve the cohesion, and hence the sticking properties, of the material. Without the polyisobutylene, the viscosity of the polybutene oil could be too great or too small to trap ecdysozoans. If the polybutene oil is not viscous enough, ecdysozoans can escape from the material, and the material will also run from the roof on which it is coated.

In another embodiment, the sticky substance **7** is a non-toxic natural glue, a glue from trees (such as GLU PELTON^{®}), glue from Plodie trap (BELGAGRI^{®}), glue from Tineola trap (BELGAGRI^{®}), Rat glue (EDIALUX^{®}), glue from Fly Catcher Spiral trap (BELGAGRI^{®}), glue from foodstuff moths trap AEROXON^{®}, or glue from Caf-K trap (BELGAGRI^{®}). In a preferred embodiment, the sticky substance 7 is selected from the group comprising glue from Fly Catcher Spiral trap (BELGAGRI^{®}), glue from foodstuff moths trap AEROXON^{®}, glue from Caf-K trap (BELGAGRI^{®}), and glue from SPIDATRAP^{®}.

In another embodiment, the sticky substance **7** is a double-sided adhesive tape such as double-sided adhesive tape AXTON^{®} (ref 5570348, Weldom), double-sided adhesive tape TESA^{®} (ref 56170, Tesa), or Eco Fixation double-sided adhesive tape TESA^{®} (ref 56450, Tesa), preferably double-sided adhesive tape AXTON ^{®} (ref 5570348, Weldom).

The use of a sticky substance or film is common in the insect traps. See, for examples, US Patent Nos. 4,709,504 and 8,371,064.

In one embodiment, further ingredients, such as for example wax, may be added to the composition depending on the requirements of the application.

In one embodiment, the sticky substance **7** may be odorless, may have a non-repulsive odor or may have an attractive odor, such as for example an essential oil of *Coriandrum sativum, Mentha spiacta,* or combinations thereof.

In one embodiment, the sticky substance **7** may further comprise at least one attractive agent. In a particular embodiment, the at least one attractive agent is a sexual attractant or a pheromone.

Examples of sexual attractant or pheromone include, but are not limited to, trans-2-hexenal, 4-oxo-(E)-2-hexenal, 4-oxo-(E)-2-octenal, essential oil of *Azadirachta indica,* essential oil of *Coriandrum sativum,* essential oil of *Cymbopogon winterianus,* essential oil of *Lavendula burnatii,* essential oil of *Lavandula latifolia,* essential oil of *Lavandula angustifolia,* essential oil of *Eugenia caryophyllus,* essential oil of *Mentha piperita,* essential oil of *Mentha spicata,* essential oil of *Mentha arvensis,* essential oil of *Melaleuca alternifolia,* essential oil of *Vanilla planifolia,* essential oil of *Vanilla fragrans,* essential oil of *Eugenia caryophyllus,* essential oil of *Canaga odorata,* olive oil, nonanal, decanal, (2E,4E)-octadienal, benzaldehyde, (+)- and (-)- limonene, 6-methyl-5-hepten-2-one, benzyl alcohol, palmitic acid, linoleic acid, lauric acid, myristic acid, pentadecanoic acid, squalene, 2,2-dimethyl 1,3-dioxolane-4-methanol, androstenone, 3-methyl indole, hexenal, octenal, butyric acid, C7-C10 aldehydes, propionic acid, valeric acid, octenol, L-lactic acid, geranyl acetone, 1-octen-3-ol, L-carbone, ethyl butyrate, dimethyl disulfide, dimethyl trisulfide, androstenone, androstadienone, guanine, methanol, methane, furan, pyridine, geranyl acetone, 1-dodecanol, 3-methyl-1-butanol, carboxylic acid, urea, indole, acetone, butone, 2-pentanone, 2-hexanone, 3-pentanone, 3-hexanone, 3-heptanone, 4-heptanone, 5-nonanone, 3-methyl-2-butanone, 4-methyl-2-pentanone, 3-penten-2-one, 3-buten-2-one, 3-hydrocy-2-butanone, 2,3-butanedioneor2,4-pentanedione, carbon disulfide, dimethyl sulfide, diethylsulfide, diethyldisulfide, methylpropyldisulfide, ethylvinylsulfide, dimethylsulfoxide, dimethyltrisulfide, dimethylsulfoxide, ammoniac, 3-carene, 2-ethylhexanol, L-menthol, alpha-terpineol, 2-decen-1-ol, decanal, (3)-cinnamaldehyde, tridecane, tetradecane, longifolene, pentadecane, diethyl phthalate, cedrol, heptadecane, pentadecanal, tetradecanoic acid, pentadecanoic acid, hexyl cinnamic aldehyde, octadecane, isopropyl myristate, galaxolide, 7-methyl-Z-tetradecen-1-ol acetate, 2-methylhexadecan-1-ol, dibutyl phthalate, ethyl hexadecanoate, isopropyl palmitate, 8-octadecenal, methyl 4-hydroxyoctadecanoate, Z-5-methyl-6-heneicosen-11-one, toluene, 1-ethenyl-3-ethyl-benzene, 1,3-diethenyl-benzne, 4-ethyl-benzaldehyde, 3-phenyl-2-propenal, 2-decen-1-ol, (3)-cinnamadehyde, tridecane, 1-(4-ethylphenyl)-ethanone, tetradecane, pentadecane, diethyl phthalate, 1-chloro-tetradecane, heptadecane, pentadecanal, tetradecanoic acid, pentadecanoic acid, 1,2-benzenedicarboxylic acid, diisooctyl ester, methoxy-phenyl oxime, 2-ethylhexanol, 2,6-dimethylundecane, 2,2,7,7-tetramethyloctane, 2,4,6-trimethyldecane, dodecane, alpha-terpineol, decanal, 2,6,10-trimethyldodecane, tridecane, propanoic acid, 2-methyl-, 3-hydroxy-2,4,4-trimethylpentyl ester, tetradecane, longifolene, 1-dodecanol, pentadecane, lilial, hexadecane, diethyl phthalate, cedrol, heptadecane, 1H-indene, 2,3-dihydro-1,1,3-trimethyl-3-phenyl-, octadecane, isopropyl myristate, galaxolide, dibutyl phthalate, isopropyl palmitate, N-(2-ethylhexyl)-5-norbornene-2,3-dicarboximide, (2E,4Z)-octadienal, (2E, 4E)-octadienal, decanal, geranylacetone, 1-methoxy-2-propanol, propanoic acid, 2-methyl-propanoic acid, butanoic acid, 3-methyl-2-butanol, isovaleric acid, menthol, geraniol, citral, isobutyric acid, N-methyl-2-2'-iminodiethanol, and citronellal, or mixtures thereof.

In one embodiment, the trap of the invention may further comprise a desiccant substance, i.e. a substance which absorbs water. In one embodiment, the desiccant substance may be solid or liquid. In one embodiment, the desiccant substance may be coated on the interior upper surface of the floor, on the interior surface of the roof and/or on the walls of the trap. In a preferred embodiment, the desiccant substance is coated at the bottom of the trap.

Examples of desiccant substance include, but are not limited to, powders such as talc, ordinary salt, activated charcoal, silicon dioxide, calcium sulfate (Drierite), calcium chloride, clay (preferably ultra-ventilated green clay or actapulgite), diatomaceous earth, and molecular sieves (for example, zeolites); or gels such as silica gel; or mixtures thereof.

In one embodiment, the trap **1** is made of a rigid material, such as plastic, wood, high density cardboard, metal, glass, polystyrene (such as expanded polystyrene), plaster, or combinations thereof.

In one embodiment, the trap **1** is made of a rigid material and is covered on at least one exterior side with a rough material, such as paper, light or medium density cardboard, light or medium density paperboard or light or medium density pasteboard.

In another embodiment, the trap **1** is made of a flexible material, such as flexible plastic, flexible resin, flexible rubber, flexible wood such as bamboo, flexible metal such as aluminum, and the like, or combinations thereof.

In one embodiment, the trap **1** is made of plastic whose composition contains an attractive agent.

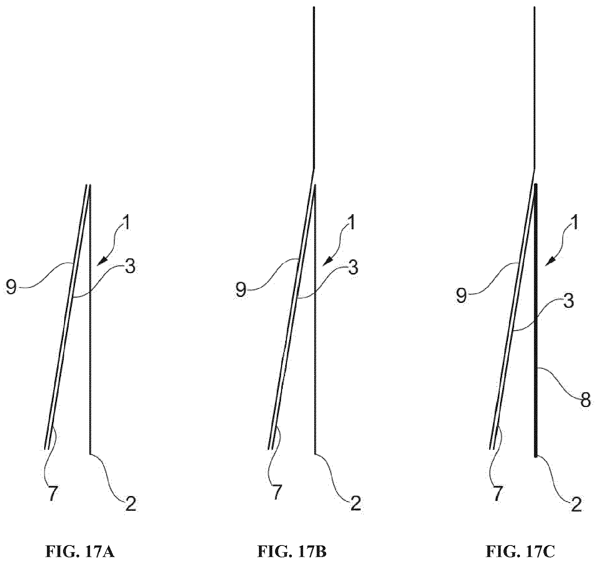

In one embodiment, the trap **1** is made of a flexible material and the roof **3** is covered with a non-rough or smooth material **9,** such as smooth plastic or smooth adhesive tape, as depicted in Fig. 17A. Therefore, ecdysozoans could not climb on the trap **1** because they would slide on the smooth material surface, in particular when placed on a vertical surface. As illustrated in Fig. 17B, the smooth material **9** may be larger than the trap **1** and extend beyond the edge of the trap **1.** According to this embodiment, the floor **2** is preferably covered with attachment means such as double-sided adhesive tape **8,** itself covered with a release paper (not represented), as depicted in Fig. 17C.

In one embodiment, the smooth material **9** may be glued to the roof **3.**

In another embodiment, the trap **1** is made of a resistant material. In particular, the trap **1** is made of a material that can support the weight of a piece of furniture or a household appliance when the trap **1** is placed under a piece of furniture or a household appliance. In one embodiment, resistant materials include, but are not limited to, plastic, wood, high density cardboard, metal, glass, plaster or combinations thereof.

In one embodiment, the trap **1** has a rough inner surface. As used herein, the term "rough" means that the surface comprises asperities, irregularities and/or relieves on the surface. In a particular embodiment, the trap of the invention has a rough floor **2.** In one embodiment, the trap **1** has not a smooth floor **2.** In another embodiment, the trap of the invention has rough walls **5.** In another embodiment, the roof **3** of the trap **1** of the invention has a rough inner surface.

Accordingly, in one embodiment, the material of the floor **2,** the roof **3** and/or the walls **5,** is a rough material. Examples of rough materials include, but are not limited to, rough glass; rough metal such as for example rough steel; gypsum; concrete; rough plastic; wood; paper; carton; and combinations thereof.

In one embodiment, the rough material has a density of at most about 1000 grains/cm². In one embodiment, the rough material has a density of at most about 800, 600, 400, 280, 240, 200, 180, 120, or 80 grains/cm². In one embodiment, the rough material has a density ranges from about 60 to about 1000 grains/cm², preferably from about 80 to about 400, more preferably from about 120 to about 280 grains/cm², even more preferably of about 200 or 240 grains/cm². In one embodiment, the rough material has a density ranges from about 200 to about 1000 grains/cm², from about 200 to about 800, or from about 200 to about 600 grains/cm². In one embodiment, the rough material has a density ranges from about 60 to about 400 grains/cm², from about 120 to about 280, from about 180 to about 240 grains/cm², or from about 200 to about 240 grains/cm². In one embodiment, the rough material has a density ranges from about 120 to about 400 grains/cm², from about 180 to about 400, or from about 200 to about 400 grains/cm². In another embodiment, the rough material has a density of about 180 grains/cm². In another embodiment, the rough material has a density of about 200 grains/cm². In another embodiment, the rough material has a density of about 240 grains/cm². In another embodiment, the rough material has a density of about 280 grains/cm². In another embodiment, the rough material has a density of about 400 grains/cm². In one embodiment, the roughness of the material is equivalent of those described hereinabove set out in another measurement unit.

In one embodiment, the material of the floor 2, the roof 3 and/or the walls 5 is wood, paper, cardboard, paperboard, pasteboard or plastic. In a particular embodiment, the inner surface of the trap 1 is made of a rough material selected from the group comprising or consisting of wood, paper, cardboard, paperboard or pasteboard, preferably cardboard, paperboard, pasteboard or rough plastic.

In one embodiment, the plastic is polypropylene (PP), polycarbonate (PC), polyarylamide (PARA or PAA), or polybutylene terephthalate (PBT). In one embodiment, the plastic comprises glass fiber, such as for example polyarylamide comprising 50-60% glass fiber.

In one embodiment, the rough material may be made by producing ridges, asperities, irregularities and/or relieves on the inner surface to be rough. In one embodiment, the rough material may be made by coating a granular substance on the inner surface to be rough. In another embodiment, the rough material may be made by sanding.

In one embodiment, the floor **2,** the roof **3** and the walls **5** are made of the same material. In another embodiment, the floor **2,** the roof **3** and/or the walls **5** are made of different materials.

In one embodiment, the floor **2,** the roof **3** and/or the walls **5** are made of a relatively opaque material so as to provide a dark interior. In a particular embodiment, the trap **1** has a dark color, such as dark blue, dark grey, or preferably black. In one embodiment, the trap of the invention may also be dark yellow, dark orange, dark red, dark purple, dark green, or dark brown.

In another embodiment, the floor **2,** the roof **3** and/or the walls **5** are made of colored material, such as for example white, yellow, red, blue, green. Indeed, some ecdysozoans are more attracted by specific colors. For example, ladybugs are more attracted by white than by other colors.

In another embodiment, the roof **3** is made of a relatively transparent material, such as for example transparent plastic or translucent paper (such as tracing paper). According to this embodiment, the trap of the invention may be used as a detector or a tester of ecdysozoans.

The present invention further concerns a method for attracting ecdysozoans, preferably insects and/or arachnids.

In one embodiment, the method of the invention comprises the step of providing a trap as described hereinabove.

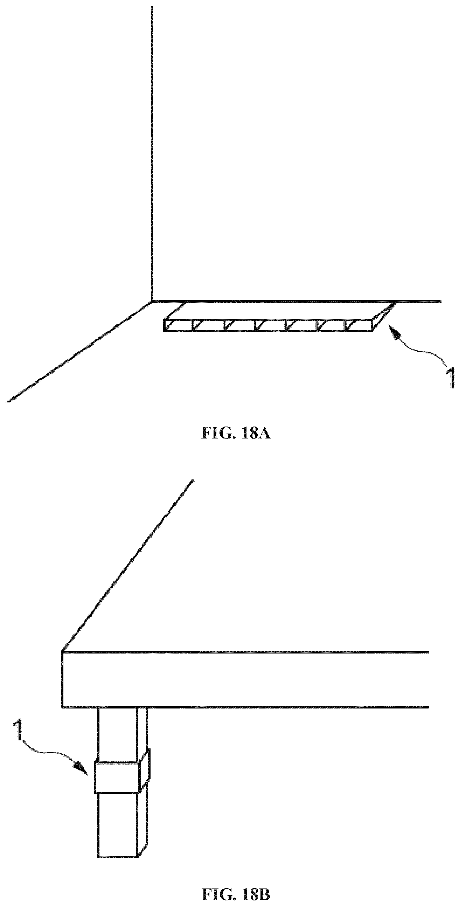

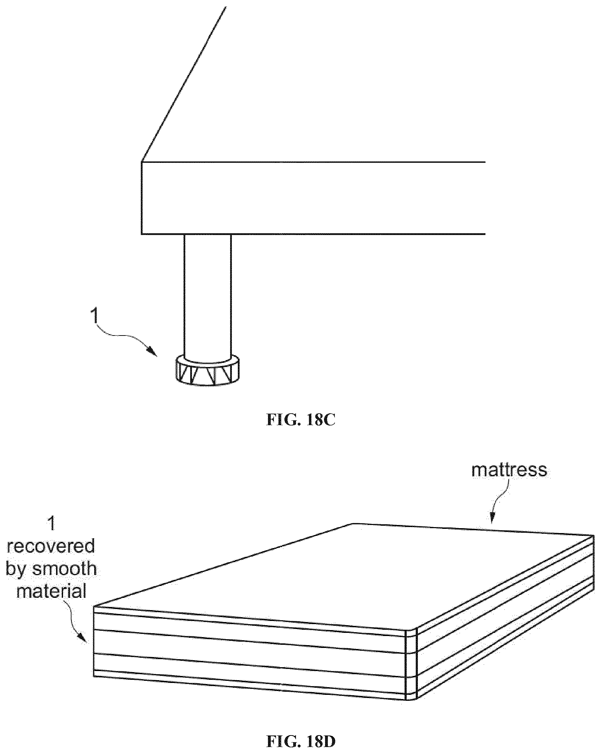

In one embodiment, the trap of the invention may be placed in a position where ecdysozoans, preferably insects and/or arachnids, are likely to be found, such as by windows, doors and skirting boards, for example. Accordingly, the trap of the invention may be placed behind head-boards, furniture (such as a nightstand) and artwork, along the seams of mattresses and bedsheets, in box springs, under legs of the bed, under table legs, under wardrobe legs, under desktop legs, under chair legs, under couches, under household appliances, under bed without legs, around bed legs, around table legs, around wardrobe legs, around desktop legs, around chair legs, along baseboards, around the windows' wooden frames, and the like, as depicted in Figs. 18A to D.

In a particular embodiment, the trap of the invention placed around bed legs, table legs, wardrobe legs, or desktop legs is a trap as depicted in Fig. 7 so that ecdysozoans coming from the top of the furniture, such as for example a bed, as well as those coming from the bottom, for example from the ground floor, may be trapped.

In another particular embodiment, the trap 1 may be placed all around mattresses, all around couch seats or all along couch backs, and the like, as illustrated in Fig. 18D.

According to this embodiment, the roof 3 of the trap 1 is preferably covered with a smooth material 9, more preferably along the complete length of the trap 1. Still according to this embodiment, the smooth material 9 preferably extend beyond the upper edge of the trap 1. Still according to this embodiment, the floor 2 is preferably covered with attachment means such as double-sided adhesive tape 8, itself covered with a release paper.

In one embodiment, a trap 1 is placed along each side of mattresses, couch seats and the like, covered with a smooth material 9 along the complete length of the trap 1 that extend beyond top edge and side edge of the trap 1 in order to join traps to each other. According to this embodiment, mattresses, couch seats or the like are surrounded on all sides by traps 1 covered with a smooth material 9 and on all corners by smooth material 9. This leaves no space by which ecdysozoans could climb, thereby protecting humans or animals being above.

In another embodiment, the trap of the invention may be used by simply laying it across a threshold or on the floor or rug. In another embodiment, the trap of the invention may be placed on a vertical surface or underneath a horizontal surface.

To secure the position of the trap **1,** in particular when the trap is placed on a vertical surface, underneath a horizontal surface or even on a horizontal surface, the trap **1** may further comprise attachment means for attaching the trap to the surface on which it is placed. Moreover, attachment means press the trap **1** against the surface it is placed onto, thereby preventing ecdysozoans to get under the trap **1.**

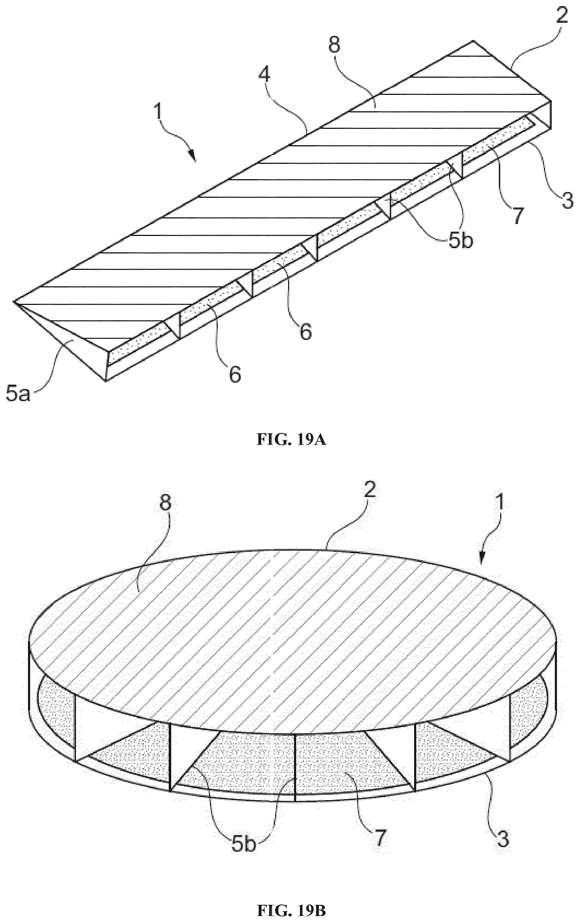

As depicted in Fig. 19, the trap of the invention may be provided with a strip of double-sided adhesive tape (or double-sided foam) **8** covered by a release paper (not represented). Such double-sided adhesives **8** are well known and commercially available in many degrees of adhesive power. In one embodiment, only a light adhesive need be used, and, for the traps to be disposable, the adhesive should be one that easily and completely releases when the trap is removed.

In one embodiment, the trap **1** may also be formed in a manner so as to allow the trap to fit around corners, possibly by providing trap having one tapered end or else traps having an L-shape.

In one embodiment, the trap of the invention may be placed outdoor or indoor. In one embodiment, the trap of the invention may be placed in dark places.

In one embodiment, the trap of the invention may be placed in the vicinity of humans or animals.

Ecdysozoans are animals with a cuticule, some chitin in the exoskeleton, and some appendages for locomotion.

The Ecdysozoa include the following phyla: Arthropoda, Onychophora, Tardigrada, Kinorhyncha, Priapulida, Loricifera, Nematoda, and Nematomorpha.

In one embodiment, arthropods include onychophorans, chelicerates, myriapods, crustaceans, and hexapods. Examples of chelicerates include, but are not limited to, palpigradi, spiders, ricinulei, house dust mites, stock mites, dermanyssus, ticks, whip scorpions, pseudoscorpiones and solifuga.

Examples of myriapods include, but are not limited to, chilipoda such as centripeda, symphylan, pauropoda and diplopoda.

Examples of crustaceans include, but are not limited to, ostracoda, branchiura, branchiopodes, theocostraca, malacostraca such as isopoda such as woodlouse, copepoda, remipedia, and cephalocarida.

Examples of hexapods include, but are not limited to, collembolan, protura, dipluran, machilidae and insects.

The class of insects include, but is not limited to, Thysanura (also called Zygentoma), Dermaptera, Siphonaptera, Phthiraptera, Isoptera, Blattaria, Heteroptera, Hemiptera, Coleoptera, Hymenoptera, Lepidoptera, and Diptera orders.

Examples of insects include, but are not limited to, silverfish, forficulidae such as earwigs, fleas, pediculidae such as head lice, termites, cockroaches, reduvidae, stink bugs, bed bugs, aphids, coccoidea, beetles, ladybugs or ladybirds, ants, butterflies, moths, and flies, including maggot of flies.

In one embodiment, ecdysozoans of the invention are ecdysozoans often found in bedrooms, including spiders, bed bugs, house dust mites, ladybugs or ladybirds, clothing moths, reduvidae, lice, fleas and scorpions.

In another embodiment, ecdysozoans of the invention are ecdysozoans often found in kitchens, including spiders, silverfish, cockroaches, ants, maggot of flies, stock mites, ladybugs or ladybirds, Mediterranean flour moths, fleas and scorpions.

In another embodiment, ecdysozoans of the invention are ecdysozoans often found in living rooms, including spiders, ladybugs or ladybirds, fleas and scorpions.

In another embodiment, ecdysozoans of the invention are ecdysozoans often found in bathrooms, including spiders and silverfish.

In another embodiment, ecdysozoans of the invention are ecdysozoans often found in cellars, including spiders, woodlouse, silverfish, earwigs, and scorpions.

In another embodiment, ecdysozoans of the invention are ecdysozoans often found in wood for home construction, including termites and furniture beetles.

In another embodiment, ecdysozoans of the invention are ecdysozoans often found in gardens, including spiders, centipede, woodlouse, diplopoda, collembolan, beetles, ladybugs or ladybirds, ants, termites, stink bugs, moths, aphids, earwigs, ticks, coccoidea, and scorpions.

In another embodiment, ecdysozoans of the invention are biting ecdysozoans, including bed bugs, reduvidae, lice, fleas and scorpions.

In another embodiment, ecdysozoans of the invention are ecdysozoans implicated in allergies, including bed bugs, house dust mites, ladybugs or ladybirds, cockroaches, and stock mites.

In another embodiment, ecdysozoans of the invention are ecdysozoans which spreads diseases, including reduvidae, fleas and ticks.

In another embodiment, ecdysozoans of the invention are ecdysozoans which cause agricultural damage, including ladybugs or ladybirds, ants, aphids, beetles, stink bugs, moths, earwigs, and coccoidea.

In another embodiment, ecdysozoans of the invention are ecdysozoans which cause degradation of the foodstuff, including cockroaches, ants, stock mites, maggots of flies, and Mediterranean flour moths.

In another embodiment, ecdysozoans of the invention are ecdysozoans which cause degradation of wood, including termites and furniture beetles.

In another embodiment, ecdysozoans of the invention are ecdysozoans which cause degradation of clothes, including clothing moths.

In another embodiment, ecdysozoans of the invention are photophobic ecdysozoans, nocturnal ecdysozoans, ecdysozoans hiding in narrow spaces or ecdysozoans attracted by dark colors, including bed bugs, reduvidae, house dust mites, cockroaches, stock mites, termites, clothing moths, spiders, silverfishes, woodlice, centipedes, diplopoda, collembolan, lice, earwigs, common furniture beetles, scorpions, ants, maggots of flies, and caterpillars of Mediterranean flour moths.

In another embodiment, ecdysozoans of the invention are light-loving ecdysozoans, diurnal ecdysozoans or ecdysozoans attracted by light colors, including ladybugs or ladybirds, flies, aphids, beetles, stink bugs, moths, fleas, ticks, coccoidea, and Mediterranean flour moths.

In another embodiment, ecdysozoans of the invention are ecdysozoans of less than 1.5 mm high, including bed bugs, silverfish, ants, lice, house dust mites, stock mites, spiders, maggot of flies, moth, ticks, aphids, coccoidea, fleas, common furniture beetle, centipedes, diplopoda, collembolan, and beetles.

In another embodiment, ecdysozoans of the invention are ecdysozoans from 1.5 mm to 2.5 mm high, including earwigs, woodlice, reduvidae (kissing bugs), ladybirds, clothing moth, spiders, maggot of flies, Mediterranean flour moth, centipedes, diplopoda, beetles, stink bugs, moth, ticks and coccoidea.

In another embodiment, ecdysozoans of the invention are ecdysozoans of more than 5 mm high, including cockroaches, scorpions, spiders, centipedes and diplopoda.

In one embodiment, the trap of the invention is designed to trap ecdysozoans, preferably arthropods, more preferably insects, crustaceans and/or arachnids. In a preferred embodiment, insects include crawling insects and larvae of flying insects (i.e. larvae of insects of the order Diptera). In a particular embodiment, the trap of the invention is designed to trap crawling insects and arachnids.

Examples of larvae of flying insects include, but are not limited to, larvae of horse-flies, crane flies, hoverflies, mosquitoes, black flies, fruit flies, robber flies, and the like.

In a preferred embodiment, the trap of the invention is designed to trap bedbugs, roaches and cockroaches, woodlice, ants, fleas, beetles, and/or spiders.

In one embodiment, the trap of the invention is an ecdysozoans trap, preferably an arthropods trap, more preferably an insects and/or arachnids trap.

### EXAMPLES

The present invention is further illustrated by the following examples.

### Rearing

Bedbugs *(Cimex lectularius*) are reared into plastic bottles containing a filter paper folded in accordion fashion to provide a refuge and a support for egg laying. They are placed in an incubator at a temperature of 21°C and are fed once a week with human fresh blood not containing anticoagulant. Experiments are performed in a suitable room at a temperature of 20°C with a relative humidity of 30-50%.

### Example 1: Rugosity test

### Experiment 1

### Material and methods

Two traps (one with smooth floor and one with rough floor) were placed in a plastic tray facing each other. The smooth floor was made of smooth plastic (polypropylene 55 µm, referred as smooth floor) from Pockets Din (Brony by doculine, 099007). The rough floor was made of sandpaper (240 grains/cm², referred as rough floor). The roof of the traps was made of black paper coated with double-sided adhesive tape (AXTON^{®}) on its interior surface. Twenty-five bedbug individuals (5 males, 5 females and 15 nymphs of all stags) were placed in the center of the tray. The number of individuals glued to the double-sided adhesive tape was noted after 15 hours.

### Results

Results are presented in Table 1.

**Table 1: Comparison between smooth and rough floor**

| | **Smooth floor** | **Rough floor** | **p-value** |
|---|---|---|---|
| **R1** | 3 | 17 | < 0.01 |
| **R2** | 3 | 21 | < 0.001 |
| **R3** | 1 | 24 | < 0.001 |
| **Total** | 7 | 62 | < 0.001 |

| | | | |
|---|---|---|---|
| R: replicate | | | |

These results show that bed bugs significantly entered into traps with rough floor, compared to traps with smooth floor. On average, over the 3 replicates, 89.9% of individuals are more attracted by a trap of the invention with rough floor (p<0,001).

### Experiment 2

### Material and methods

A plexiglass plate comprising areas sanded with different densities of sandpaper (4000, 3000, 2000, 1000, 400, 280, 120, 80 and 60 grains/cm²) was used. Sandpaper of 4000 grains/cm² provides a very fine sanding, while sandpaper of 60 grains/cm² leads to important scratch on the plexiglass plate. The ease of bedbugs to travel on each sanded area was observed. Then the capacity of bedbugs to climb on the support when it is tilted was investigated.

### Results

Bedbugs have great difficulty moving through plexiglass areas sanded with sandpapers of 4000 to 1000 grains/cm² (they slide). However, the more the density decreases, the more bedbugs have facility to move, which is reflected by an increase of their travel speed (data not shown). When the plexiglass plate is tilted, bedbugs are not able to hold onto and slide along the plexiglass areas of 4000 and 3000 grains/cm². From 2000 grains/cm², bedbugs are able to hold on to the support even vertically.

Therefore, the more the material is rough, the more bedbugs will move onto the material with ease.

### Experiment 3

### Material and methods

The same experiment as in Experiment 2 hereinabove was performed on two other materials with increasing roughness: sand paper and plastic rough-textured plastic.

### Results

Bedbugs were found to slide on smooth materials and materials very slightly rough. The mobility of individuals increased up from a density of about 1000 grains/cm² to 200 grains/cm². Then, individuals have increasing difficulties in mobility on materials with a greater roughness, from 180 to 60 grains/cm².

Therefore, the mobility of individuals to enter into the trap depends on roughness of the material. The results show that the most appropriate density increased up to 200 grains/cm².

### Example 2: Roof coated with double-sided adhesive tape

### Material and methods

The trap used in this experiment is as represented in Fig. 1. The sloping roof was coated with double-sided adhesive tape (AXTON^{®}) on its interior surface. The trap is 135 mm length and 15 mm width, and the opening of the trap is 1.5 mm high. The trap comprises 9 walls, 2 external walls and 7 internal walls, delimiting 9 interstices of 15 mm in length.

This trap was placed in a plastic tray of 30 x 20 cm, of which the bottom was sanded with sandpaper. Fifteen bedbug individuals (5 males, 5 females and 5 nymphs of all stages) were placed in the tray. The number of individuals glued to the double-sided adhesive tape was noted after 15 hours.

### Results

After 15 hours, 73% of the males, 80% of the females, and 68% of the nymphs were caught into the trap, i.e. irreversibly glued on the roof of the trap.

### Example 3: Evaluation of double-sided adhesive tape as a repellent

This experiment aims to determine whether the double-sided adhesive tape is not repellent for bedbugs.

### Material and methods

The experimental procedure is the same as example 2. In addition to the test trap containing double-sided adhesive tape coated on the interior surface of the roof, a control trap without double-sided adhesive tape was placed in the plastic tray vis-a-vis the test trap.

### Results

Results show that bedbugs equally sheltered in the test trap (with adhesive tape) and in the control trap (without adhesive tape). Therefore, double-sided adhesive tape is not repellent for bedbugs.

### Example 4: Evaluation of the production of pheromones

This experiment aims to determine whether bedbugs glued to double-sided adhesive tape produce alert pheromones.

### Material and methods

The experimental procedure is the same as example 3. A trap comprising a various number of bedbugs glued to double-sided adhesive tape in a second trap was placed in the plastic tray vis-a-vis a trap with double-sided adhesive tape but without glued bedbugs. Only males were used for this experiment, to avoid flight of females and nymphs due to traumatic insemination.

### Results

Results show that bedbugs sheltered in both the trap with glued individuals and in the trap without glued individuals. Therefore, glued bedbugs are not repellent for other bedbugs.

Moreover, the Applicant surprisingly demonstrated that the more bedbugs are glued to the double-sided adhesive tape, the more other bedbugs shelter in this trap compared to the trap without glued individuals. The experimental procedure was the same as hereinabove with 10 or 21 bedbugs (males, females, nymphs) glued into the trap beforehand, and 30 free bedbugs (males, females, nymphs) placed in the tray. The number of individuals sheltered into the traps was noted after 15 hours, not including the previously glued bedbugs. Each experiment was conducted in three replicates.

Table 2 presents the average of free bedbugs sheltering into a trap with glued bedbugs and into a trap without glued bedbugs.

**Table 2: Comparison between a trap with glued bedbugs and a trap without glued bedbugs**

| | **Trap with glued bedbugs** | **Trap without glued bedbugs** |
|---|---|---|
| **10 glued bedbugs** | 16.3 | 6.3 |
| **21 glued bedbugs** | 21 | 3 |

Therefore, captured bedbugs are attractive for free bedbugs. The trap efficiency thus gradually increases as bedbugs are captured.

### Example 5: Coated roof vs. coated floor

This experiment aims to determine the efficacy of the roof coated with a sticky substance in comparison to common traps comprising a sticky film on the upper surface of the floor.

### Material and methods

The experimental procedure is the same as the example 3. In addition to the trap containing double-sided adhesive tape coated on the interior surface of the roof (test trap), a trap containing double-sided adhesive tape coated on the upper surface of the floor was placed in the plastic tray vis-a-vis the test trap.

### Results

Results are presented in Table 3.

**Table 3: Comparison between floor and roof coated with a sticky substance**

| | **Coated floor** | **Coated roof** | **p-value** |
|---|---|---|---|
| **Total** | 9 | 64 | <0.001 |
| **Males** | 0 | 28 | <0.001 |
| **Females** | 6 | 19 | 0.016 |
| **Nymphs** | 3 | 17 | 0.0037 |

Individuals (males, females or nymphs) significantly sheltered into traps in which the roof is coated with the sticky substance, compared to traps in which the floor is coated with the sticky substance. Either sex and stages, 88% of individuals were trapped into traps in which the roof is coated with the sticky substance (p<0.001).

### Example 6: Optimum of opening high

### Material and methods

The experimental procedure is the same as the example 3 in which 4 different heights of the opening were tested: 1.5 mm, 2.5 mm, 5 mm and 10 mm. Three repetitions were performed for each height.

### Results

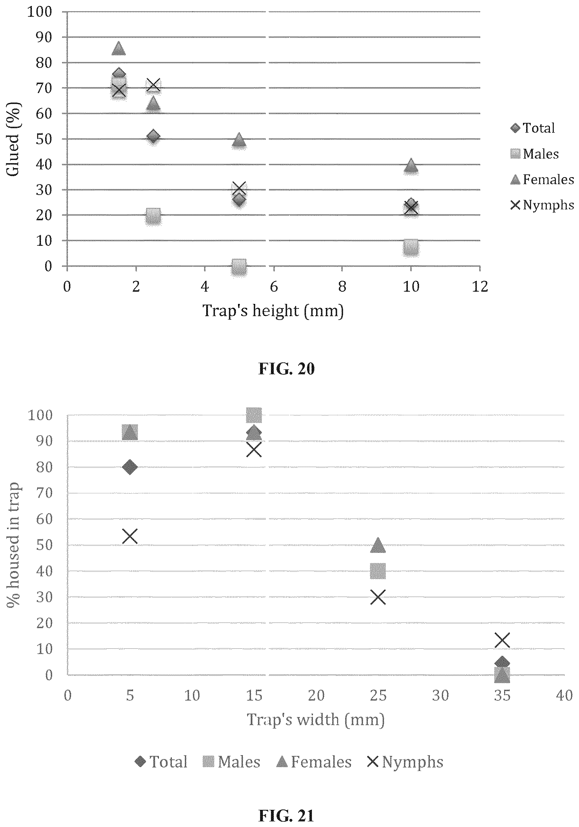

Results of trapping efficacy as a function of trap height follows a Poisson distribution. Whether individuals are males, females or nymphs, the maximal efficiency of the trap is reached with an opening of 1.5 mm (Fig. 20). The same maximum efficiency was reached with an opening of 1.7 mm (data not shown).

### Example 7: Optimum of trap width

### Material and methods

The experimental procedure is the same as the example 3 with an opening height of 1.5 mm, in which 4 different trap width were tested: 5 mm, 15 mm, 25 mm and 35 mm. Three repetitions were performed for each height.

### Results

Results of attractiveness as a function of trap width follows a Poisson distribution (Fig. 21). Whether individuals are males, females or nymphs, a trap with a width of 15 mm leads to significantly more trapped individuals than a length of 25 or 35 mm. The optimum width is therefore between 5 and 15 mm.

The opening height has been set at 1.5 mm, the maximal efficiency of the trap is reached with a roof slope ranging from 0.1° to 0.3°.

### Example 8: Efficiency of the trap with different ecdysozoan species

### Material and methods

The experimental procedure is the same as the example 3. The trap was placed in a plastic tray of 30 x 20 cm, of which the bottom was sanded with sandpaper without any attractive agent. Three ecdysozoan species were tested: woodlice (*Oniscus asellus*), ants (red ants, *Myrmica* spp.) and cockroaches (red runner cockroaches, *Blatta lateralis*). Opening heights and trap length were tested according to the ecdysozoan size. The number of trapped individuals was observed after one night.

### Results

Results are presented in Table 4.

**Table 4: Efficiency of a glued roof trap with different ecdysozoan species**

| **Species** | **Opening height (mm)** | **Trap width (mm)** | **Attracted (%)** | **Glued (%)** |
|---|---|---|---|---|
| **Woodlouse** | 1.5 | 15 | 8.7 | 50 |
| | 2.5 | 15 | 73.9 | 94.1 |
| **Ant** | 1.5 | 15 | 47.6 | 100 |
| **Cockroach** | 2.5 | 70 | 0 | 0 |
| | 5 | 70 | 100 | 100 |
| | 10 | 70 | 100 | 80 |
| | 15 | 70 | 100 | 100 |

Results show that at least 94% and up to 100% of woodlice, ants and cockroaches attracted in the trap are definitively trapped after one night. Therefore, a trap comprising a sloping roof coated with a sticky substance (double-sided adhesive tape) is strongly effective on various ecdysozoans species.

Moreover, for a maximal efficiency, width of the trap (i.e. length of the interstices) and height of the trap should be adapted to the size of ecdysozoans to be trapped. For example, the opening size and/or the width should be greater for cockroaches than for ants.

According to the results presented in Table 2, a line may be drawn to represent the minimal opening height as a function of ecdysozoans' size (Fig. 22). Therefore, the height of the trap openings can be estimated by plotting the ecdysozoans' height on the line and by reading the value on the vertical (y) axis.

### Example 9: Elongated trap compared to commercially available traps

### Material and methods

The experimental procedure is the same as the example 3. In addition to the trap containing double-sided adhesive tape coated on the interior surface of the roof according to the present invention (test trap), 3 different commercially available traps were placed one by one in a plastic tray of 120 x 95 cm vis-a-vis the test trap. The 3 commercially available traps used for this test comprise a sticky substance on the floor.

### Results

Results are presented in Table 5.

**Table 5: Comparison between test trap and commercially available traps**

| | **Attracted (%)** | **p-value** | **Trapped (%)** | **p-value** |
|---|---|---|---|---|
| **BED BUG DETECTION SYSTEM** | 53 | NS | 0 | p<0,001 |
| **TEST TRAP** | 47 | | 76 | |
| **BUGGYBEDS** | 16 | p<0,05 | NS | p<0,001 |
| **TEST TRAP** | 84 | | 74 | |
| **BED BUG ALERT MONITOR** | 12 | p<0,01 | NS | p<0,001 |
| **TEST TRAP** | 88 | | 75 | |

| | | | | |
|---|---|---|---|---|
| NS: non-significant | | | | |

BUGGYBEDS^{®} (FABRIC HITCHHIKERS^{™}) and BEDBUG ALERT MONITOR (Bird-X Inc) were so poorly effective that too few individuals were attracted in order to calculate a significant percentage of trapped individuals. Only the trap BEDBUG DETECTION SYSTEM^{™} (CATCHMASTER^{®}) presents a similar attractiveness for bedbugs than the trap of the invention.

The data regarding the efficiency of the catching by the sticky substance (corresponding to the number of individuals definitively trapped into the trap), the trap of the invention is largely the most efficient with an average of 74% of caught individuals. On the contrary, almost all individuals attract into the 3 commercially available traps were not glued or have been able to escape the glue.

Therefore, the trap of the invention comprising a roof coated with a sticky substance is significantly more efficient than commercially available traps.

### Example 10: Circular trap compared to commercially available traps

### Material and methods

The circular trap for this experiment is as shown in Fig. 12. This trap is intended in particular to be placed under the foot of beds, using humans as attractants. To mimic carbon dioxide and heat produced by humans, a mixture comprising yeast, sugar and water is placed on top of the trap.

This circular trap was placed in a plastic tray of 120 x 95 cm, of which the bottom was sanded with sandpaper. Fifteen bedbug individuals (5 males, 5 females and 5 nymphs of all stages) were placed in the tray. The number of individuals glued to the double-sided adhesive tape was noted after 15 hours.

In addition to the circular trap of the invention (test trap), 4 different commercially available traps were placed one by one in the plastic tray vis-a-vis the test trap. The attractive agent and the mean of capture of the 5 commercially available traps used for this test are presented in Table 6.

**Table 6: Features of the 5 commercially available traps**

| | **CO₂** | **Heat** | **Chemical attractant** | **Capture mean** |
|---|---|---|---|---|
| **CLIMB'UP^{®} (Susan McKnight Inc)** | | | | Pitfall |
| **BB ALERT^{®} Active (MidMos Solutions Ltd)** | | X | | Glue |
| **FIRST BED BUG MONITOR (BIOCARE^{®})** | X | X | X | Glue |
| **FIRST RESPONSE BED BUG TRAP (BIOCARE^{®})** | X | X | X | Glue |

As for the trap of the invention, the trap CLIMB'UP^{®} is intended to use humans as attractants. To mimic carbon dioxide and heat produced by humans, the same mixture comprising yeast, sugar and water is placed on top of this trap. The 3 other commercially available traps comprise carbon dioxide, heat and/or a chemical attractant to attract insects.

### Results

Results are presented in Table 7.

**Table 7: Comparison between circular test trap and commercially available traps**

| | **Attracted (%)** | **p-value** | **Trapped (%)** | **p-value** |
|---|---|---|---|---|
| **CLIMB'UP^{®}** | 64 | NS | 67 | NS |
| **Test trap** | 36 | | 100 | |
| **BB ALERT^{®} Active** | 67 | p<0.01 | 27 | p<0.01 |
| **Test trap** | 22 | | 90 | |
| **FIRST BED BUG MONITOR** | 0 | p<0.001 | NA | p<0.001 |
| **Test trap** | 100 | | 71 | |
| **FIRST REPONSE BED BUG TRAP** | 68 | p<0.01 | 24 | p<0.05 |
| **Test trap** | 12 | | 67 | |

| | | | | |
|---|---|---|---|---|
| NS: nonsignificant; NA: not applicable | | | | |

FIRST RESPONSE BED BUG MONITOR was so poorly effective that too few individuals were attracted in order to calculate a significant percentage of trapped individuals. BB ALERT^{®} Active and FIRST RESPONSE BED BUG TRAP are significantly more attractive than the trap of the invention. However, these two traps comprise carbon dioxide and/or heat to attire insects, which are efficient only for a few hours. Therefore, the trap of the invention would be more efficient in the long-term.

Concerning the capture efficiency, the trap of the invention is more efficient than all the commercially available tested traps. Moreover, it was noteworthy that although the traps CLIMB'UP^{®}, BB ALERT^{®} Active and FIRST RESPONSE BED BUG TRAP are more attractive that the trap of the invention, individuals are not irreversibly trapped into the traps. On the contrary, a very large majority of the individuals attracted into the trap of the invention are definitely trapped.

Therefore, the trap of the invention is significantly more efficient than commercially available traps.

### Example 11: Slope of the roof

### Material and methods

Various degrees of the sloping roof were tested: a linear sloping roof from the opening to the back of the trap, a roof with two distinct slopes, and a roof that is concave. In each case, the inner surface of the roof is coated with double-sided adhesive tape (AXTON^{®}).

The linear sloping roof is the same as the trap of example 2. The roof with various degrees is as represented in Fig. 5 and 6. The concave roof is as represented in Fig. 23 and 24. Each trap was placed in a plastic tray of 30 x 20 cm, of which the bottom was sanded with sandpaper. Ten male bedbugs were placed in the tray. The number of individuals glued to the double-sided adhesive tape was noted after 15 hours. Three replicates were performed for each experiment.

### Results

Results are presented in Table 8.

**Table 8: Percentage of individuals glued according to the shape of the roof**

| | **Glued (%)** |
|---|---|
| **Linear** | 33.3 |
| **Concave** | 71.4 |
| **Two slopes** | 86.1 |

These results clearly show that individuals are more glued in the traps where the degree of the slope varies along the roof (concave roof and roof with two distinct slopes, in comparison to a linear roof). In particular, individuals are more glued in a trap comprising a roof with two distinct slopes.

### REFERENCES

- 1 -: Trap;
- 2 -: Floor;
- 3 -: Roof;
- 4 -: Longitudinal line;
- 5 -: Wall;
- 5a -: External wall;
- 5b -: Internal wall;
- 6 -: Opening;
- 7 -: Sticky substance;
- 8 -: Double-sided adhesive tape;
- 9 -: Smooth material;
- 10 -: Salient angle.

## Claims

1. An ecdysozoans trap (1) comprising a floor (2), a roof (3), vertical walls (5) and at least one interior surface of the roof (3) and/or of at least one vertical wall (5) coated of sticky substance (7), and comprising a sloping floor (2) or a sloping roof (3), wherein the slope describes an angle varying along the floor (2) or the roof (3), wherein the trap (1) has an angle α between the roof (3) and the floor (2) at a bottom of the trap (1) and an angle β between the roof (3) and the floor (2) at an opening (6) of the trap (1) and wherein said angle β is greater than said angle α, said slope comprises at least two distinct and successive slopes and the slope is growing from the bottom of the trap to the opening (6) of the trap.

2. The trap according to claim 1, wherein said at least one interior surface is the interior surface of the roof (3).

3. The trap according to claim 1, wherein said at least one interior surface is the interior surface of at least one vertical wall (5).

4. The trap according to any one of claims 1 to 3, wherein the roof (3) is concave.

5. The trap according to any one of claims 1 to 4, wherein said sticky substance (7) is tacky glue or double-sided adhesive tape.

6. The trap according to any one of claims 1 to 5, wherein said sticky substance (7) further comprises at least one attractive agent, preferably a sexual attractant or a pheromone.

7. The trap according to any one of claims 1 to 6, wherein said trap (1) is made of a rigid material, preferably plastic, wood, high density cardboard, metal, glass, polystyrene, plaster, or combinations thereof.

8. The trap according to any one of claims 1 to 7, wherein said trap (1) has a rough inner surface, preferably a rough inner floor.

9. The trap according to any one of claims 1 to 8, wherein said trap (1) is an elongated strip ranging from about 2 cm to about 500 cm length.

10. The trap according to any one of claims 1 to 9, wherein said trap (1) comprises two opening (6) sides on each side of a longitudinal axis (4).

11. The trap according to any one of claims 1 to 10, wherein said trap (1) is a circular trap ranging from about 2 cm to about 15 cm in diameter.

12. The trap according to any one of claims 1 to 11, wherein said trap (1) comprises openings (6) sufficiently large for ecdysozoans to enter said trap.

13. The trap according to claim 12, wherein said openings (6) range from about 0.1 mm to about 20 mm high.

14. A method for trapping ecdysozoans comprising the step of providing a trap (1) according to any one of claims 1 to 13.

## Patentansprüche

1. Ecdysozoa-Falle (1) umfassend einen Boden (2), ein Dach (3), vertikale Wände (5) und mindestens eine Innenfläche des Daches (3) und/oder der mindestens einen vertikalen Wand (5), die mit einer klebrigen Substanz (7) beschichtet sind, und umfassend einen schrägen Boden (2) oder ein schräges Dach (3), wobei die Schräge einen Winkel beschreibt, der entlang des Bodens (2) oder des Daches (3) variiert, wobei die Falle (1) einen Winkel a zwischen dem Dach (3) und dem Boden (2) an einer Unterseite der Falle (1) und einen Winkel β zwischen dem Dach (3) und dem Boden (2) an einer Öffnung (6) der Falle (1) aufweist und wobei der Winkel β größer ist als der Winkel α, das Gefälle umfasst mindestens zwei verschiedene und aufeinanderfolgende Schrägen und die Schräge nimmt vom Boden der Falle zu der Öffnung (6) der Falle zu.

2. Falle nach Anspruch 1, wobei die mindestens eine Innenfläche die Innenfläche des Daches (3) ist.

3. Falle nach Anspruch 1, wobei die mindestens eine Innenfläche die Innenfläche mindestens einer vertikalen Wand (5) ist.

4. Falle nach einem der Ansprüche 1 bis 3, wobei das Dach (3) konkav ist.

5. Falle nach einem der Ansprüche 1 bis 4, wobei die klebrige Substanz (7) Tacky Glue oder doppelseitiges Klebeband ist.

6. Falle nach einem der Ansprüche der Ansprüche 1 bis 5, wobei die klebrige Substanz (7) ferner mindestens einen Lockstoff, vorzugsweise einen sexuell wirkenden Lockstoff oder ein Pheromon umfasst.

7. Falle nach einem der Ansprüche 1 bis 6, wobei die Falle (1) aus einem starren Material, vorzugsweise Kunststoff, Holz, hochdichtem Karton, Metall, Glas, Polystyrol, Gips oder Kombinationen davon besteht.

8. Falle nach einem der Ansprüche 1 bis 7, wobei die Falle (1) eine raue Innenfläche, vorzugsweise einen rauen Innenboden aufweist.

9. Falle nach einem der Ansprüche 1 bis 8, wobei die Falle (1) ein länglicher Streifen ist, der von etwa 2 cm bis etwa 500 cm Länge reicht.

10. Falle nach einem der Ansprüche 1 bis 9, wobei die Falle (1) zwei Öffnungsseiten (6) auf jeder Seite einer Längsachse (4) umfasst.

11. Falle nach einem der Ansprüche 1 bis 10, wobei die Falle (1) eine kreisförmige Falle ist, die von etwa 2 cm bis etwa 15 cm im Durchmesser reicht.

12. Falle nach einem der Ansprüche 1 bis 11, wobei die Falle (1) Öffnungen (6) umfasst, die für das Eintreten der Ecdysozoa in die Falle ausreichend groß sind.

13. Falle nach Anspruch 12, wobei die Öffnungen (6) von etwa 0,1 mm bis etwa 20 mm Höhe reichen.

14. Verfahren für das Einfangen von Ecdysozoa, umfassend den Schritt des Bereitstellens einer Falle (1) nach einem der Ansprüche 1 bis 13.

## Revendications

1. Piège pour ecdysozoaires (1) comprenant une base (2), un dessus (3), des parois verticales (5) et au moins une surface intérieure du dessus (3) et/ou d'au moins une paroi verticale (5) qui est recouverte d'une substance collante (7), et comprenant une base inclinée (2) ou un dessus incliné (3), l'inclinaison décrivant un angle qui varie le long de la base (2) ou du dessus (3), le piège (1) présentant un angle α entre le dessus (3) et la base (2) au niveau du fond du piège (1) et un angle β entre le dessus (3) et la base (2) au niveau d'une ouverture (6) du piège (1) et ledit angle β est supérieur audit angle α, ladite inclinaison comprenant au moins deux inclinaisons distinctes et successives et l'inclinaison augmentant à partir du fond du piège vers l'ouverture (6) du piège.

2. Piège selon la revendication 1, dans lequel ladite au moins une surface intérieure est la surface intérieure du dessus (3).

3. Piège selon la revendication 1, dans lequel ladite au moins une surface intérieure est la surface intérieure d'au moins une paroi verticale (5).

4. Piège selon l'une quelconque des revendications 1 à 3, dans lequel le dessus (3) est concave.

5. Piège selon l'une quelconque des revendications 1 à 4, dans lequel la substance collante (7) est une colle poisseuse ou un ruban adhésif double face.

6. Piège selon l'une quelconque des revendications 1 à 5, dans lequel ladite substance collante (7) comprend en outre au moins un agent attractif, de préférence un attractif sexuel ou une phéromone.

7. Piège selon l'une quelconque des revendications 1 à 6, ledit piège (1) étant fabriqué à partir d'un matériau rigide, de préférence du plastique, du bois, du carton haute densité, du métal, du verre, du polystyrène, du plâtre ou des combinaisons de ceux-ci.

8. Piège selon l'une quelconque des revendications 1 à 7, ledit piège (1) présentant une surface intérieure rugueuse, de préférence une base intérieure rugueuse.

9. Piège selon l'une quelconque des revendications 1 à 8, ledit piège (1) étant une bande allongée d'une longueur allant d'environ 2 cm à environ 500 cm.

10. Piège selon l'une quelconque des revendications 1 à 9, ledit piège (1) comprenant deux côtés pourvus d'ouvertures (6) de chaque côté d'un axe longitudinal (4).

11. Piège selon l'une quelconque des revendications 1 à 10, ledit piège (1) étant un piège circulaire d'un diamètre allant d'environ 2 cm à environ 15 cm.

12. Piège selon l'une quelconque des revendications 1 à 11, ledit piège (1) comprenant des ouvertures (6) suffisamment grandes pour que les ecdysozoaires puissent entrer dans ledit piège.

13. Piège selon la revendication 12, dans lequel lesdites ouvertures (6) présentent une hauteur allant d'environ 0,1 mm à environ 20 mm.

14. Procédé pour piéger des ecdysozoaires, comprenant l'étape consistant à fournir un piège (1) selon l'une quelconque des revendications 1 à 13.
